# FASCICULE DE BREVET EUROPEEN

(11) **EP 1 353 185 B1**
(45) Date de publication et mention de la délivrance du brevet: **26.09.2012**
(21) Numéro de dépôt: 03290775.0
(22) Date de dépôt: 27.03.2003
(51) Int. Cl.: G01P 15/097, G01P 15/10, G01P 1/00, G01C 19/56, B81B 7/00

(54) **Capteur inertiel à sonde de température intégrée**
Ineritalsensor mit integrierter Temperatursonde
Inertial sensor having an integrated temperature probe

(30) Priorité: 12.04.2002 FR 0204590
(43) Date de publication de la demande: 15.10.2003
(73) Titulaire: Sagem Défense Sécurité, 75015 Paris (FR)
(72) Inventeur: Featonby, Paul, 91400 Orsay (FR); Renault, Alain, 95300 Pontoise (FR); Vandebeuque, Paul, 95101 Argenteuil (FR)
(74) Mandataire: Lavialle, Bruno François Stéphane

(56) Documents cités:
- US-A- 4 155 257
- US-A- 5 020 370
- US-A- 5 780 742
- US-B1- 6 230 565

## Description

La présente invention concerne les capteurs inertiels, notamment les accéléromètres et les gyromètres.

L'invention concerne plus particulièrement les capteurs comprenant une cellule sensible comportant une plaque dans laquelle sont délimités une partie formant un organe support et au moins un élément vibrant associé à des moyens d'excitation. Les moyens d'excitation permettent de faire vibrer l'élément vibrant et de détecter la fréquence de vibration de celui-ci.

### ARRIERE PLAN DE L'INVENTION

Dans le cas d'un accéléromètre, un élément inertiel est relié à l'élément vibrant. Cet élément inertiel est une masse elle-même délimitée dans la plaque et mobile par rapport à l'organe support. Lorsque le capteur est soumis à une accélération, la masse exerce une force sur l'élément vibrant. Cette force modifie la fréquence de vibration de telle manière que la variation de la fréquence de vibration de l'élément vibrant permet de déterminer l'accélération à laquelle le capteur est soumis.

Toutefois, on s'est aperçu que des variations de température provoquaient également des variations de la fréquence de vibration de l'élément vibrant.

Pour obtenir une mesure précise d'accélération, il est donc nécessaire de déterminer l'influence respective de l'accélération et de la température dans la variation de la fréquence de vibration.

Pour ce faire, il est connu d'associer un capteur de température au capteur d'accélération. Cependant, du fait de la compacité des capteurs d'accélération du type précité, les capteurs de température connus doivent être montés séparés de la cellule sensible. Or, il s'avère que, d'une part, le gradient de température régnant à l'intérieur du capteur et, d'autre part, le décalage temporel entre une variation de température de la sonde et la température de l'élément vibrant sont trop importants pour que la température mesurée permette de déterminer de façon fiable l'influence de la température dans la variation de la fréquence de vibration.

On connaît également du document US-A-5 020 370 un transducteur qui comporte une plaque dans laquelle sont délimités deux éléments vibrants dont les extrémités sont solidaires de parties support destinées à être fixées à un bâti et à une masse. Une sonde de température formée d'une piste conductrice s'étend sur une poutre reliée à au moins une des parties support et parallèle aux éléments vibrants. La mesure de température est alors réalisée près des éléments vibrants. Toutefois, la poutre supportant la sonde de température risque d'affecter le comportement mécanique du transducteur et donc la sensibilité du transducteur à l'accélération.

### OBJET DE L'INVENTION

Un but de l'invention est de fournir un capteur minimisant les erreurs dues à des variations de température.

### BREVE DESCRIPTION DE L'INVENTION

En vue de la réalisation de ce but, on prévoit, selon l'invention, un capteur de détection d'accélération comporte une plaque dans laquelle sont délimités une partie support, au moins un élément vibrant porté par la partie support et sensible à des mouvements auxquels le capteur est soumis, et au moins une partie additionnelle reliée à l'élément vibrant et active dans la détection d'accélération, le capteur comprenant une sonde de température comportant une piste conductrice qui est fixée au moins sur la partie additionnelle active et qui a une résistance variant en fonction d'une température ambiante.

Ainsi, la température peut être déterminée de façon précise, au plus près de l'élément vibrant à partir de la mesure de la résistance de la piste conductrice puis être prise en compte pour déterminer de façon fiable la part respective de la température et du mouvement du capteur dans la variation de la fréquence de vibration de l'élément vibrant.

De préférence, la sonde de température s'étend de façon symétrique par rapport à l'élément vibrant.

On minimise ainsi les erreurs pouvant résulter d'un gradient de température à l'intérieur du capteur.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :
- la figure 1 est une vue de dessus d'un capteur d'accélération conforme à l'invention,
- la figure 2 est une vue analogue à la figure 1 d'un capteur d'accélération selon une variante de réalisation.

### DESCRIPTION DETAILLEE DE L'INVENTION

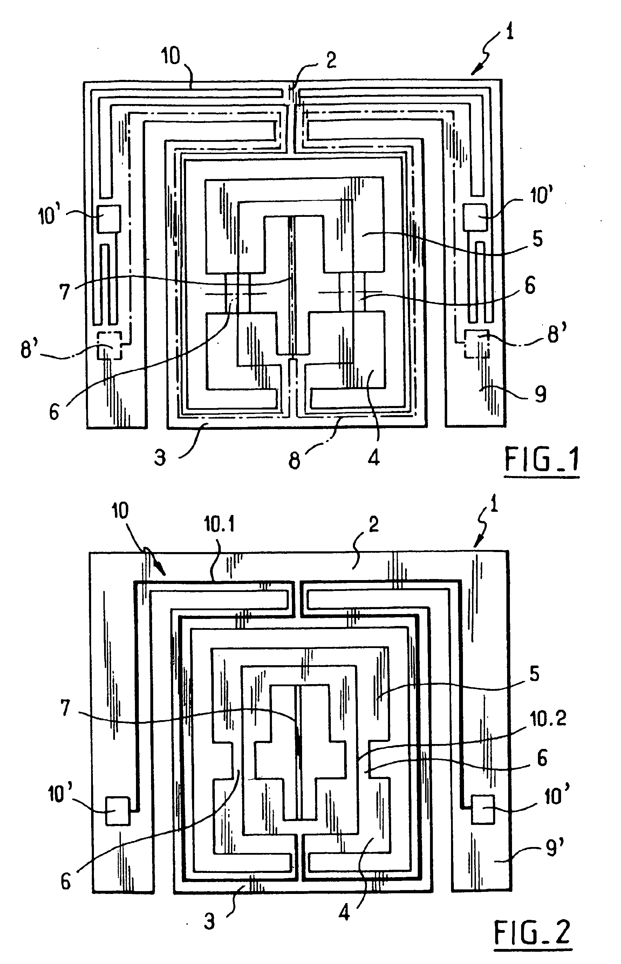

En référence à la figure 1, le capteur d'accélération comporte une plaque généralement désignée en 1 en quartz piézo-électrique dans laquelle sont délimités de manière connue en elle-même une partie support 2 destinée à être fixée dans un boîtier, un cadre de découplage 3 ayant un côté solidaire de l'organe support 2 et un côté opposé relié à une masse 4, une masse 5 reliée à la masse 4 par des charnières 6, et un élément vibrant 7 ayant des extrémités solidaires des masses 4, 5. Les charnières 6 sont formées par des pattes déformables formées dans la plaque 1 et ont des axes compris dans le plan de la figure de sorte que la direction sensible du capteur est quasi normale à ce plan. Le cadre de découplage 3, la masse 4, la masse 5 et les charnières 6 forment des parties additionnelles actives dans la détection d'accélération en ce sens qu'elles participent avec l'élément vibrant à la fonction de détection d'accélération.

Le capteur comprend un circuit 8 d'excitation piézo-électrique de l'élément vibrant 7 qui est symbolisé sur la figure par un trait mixte et qui est agencé de façon connue en soi pour, d'une part, mettre en vibration l'élément vibrant 7 selon une fréquence déterminée et, d'autre part, détecter les variations de la fréquence de vibration de l'élément vibrant 7. Le circuit 8 s'étend sur une face 9 de la plaque 1 et comporte des bornes 8' de liaison à un module électronique (non représenté) de commande du capteur.

Le capteur comprend également une sonde de température qui comporte une piste conductrice 10, symbolisée sur la figure par un trait fort, qui dans cet exemple de réalisation s'étend sur la face 9 de la plaque 1 au niveau de l'organe support 2 et des parties additionnelles actives.

La piste conductrice 10 est réalisée en un matériau dont la conductivité varie en fonction des variations de température, en l'occurrence de l'or ou un alliage d'or. Si nécessaire, la piste conductrice 10 comprend des portions sinueuses afin que la piste conductrice ait une longueur compatible avec la résistance appropriée pour un bon fonctionnement de l'électronique de mesure et de calcul de la compensation thermique correspondante.

De préférence, la piste conductrice 10 est symétrique par rapport à l'élément vibrant pour que l'erreur de mesure de la température soit minimisée dans le cas d'un gradient de température à l'intérieur du boîtier du capteur.

La piste conductrice 10 comporte des bornes 10' de liaison au module électronique de commande du capteur.

Le circuit 8 et la piste conductrice 10 sont ici dans le même de métal et peuvent être réalisés soit par dépôt localisé de métal sur la plaque 1 pour former le circuit 8 et la piste conductrice 10, soit en recouvrant les faces de la plaque 1 d'une couche métallique puis en attaquant ou gravant celle-ci selon des techniques connues en elles-mêmes pour former le circuit 8 et la piste conductrice 10.

Le module de commande du capteur est agencé pour, d'une part commander le circuit d'excitation 8 et traiter l'information relative à la fréquence de vibration de l'élément vibrant 7 et, d'autre part, pour déterminer la température à partir de la résistance de la piste conductrice 10 afin de distinguer dans la fréquence de l'élément vibrant 7 la part résultant de la température de la part résultant de l'effort exercé sur l'élément vibrant 7 par la masse 6 soumise à une accélération.

Bien entendu, l'invention n'est pas limitée au mode de réalisation décrit et on peut y apporter des variantes de réalisation sans sortir du cadre de l'invention tel que défini par les revendications.

En particulier, l'invention s'applique à tous les capteurs à élément vibrant. Ainsi, bien que le capteur décrit soit réalisé à partir d'une plaque de quartz et mette en oeuvre l'effet piézo-électrique, le capteur peut être réalisé à partir d'une plaque de silicium dont l'élément vibrant est excité de façon capacitive, magnétique, thermoélectrique ou autre. Le mode de fabrication d'un tel capteur est analogue à celui décrit ci-dessus.

Bien que le capteur ait été décrit avec un élément inertiel se présentant sous forme d'une masse 5 pour réaliser un accéléromètre, la sonde de température selon l'invention peut être utilisée en relation avec n'importe quel élément inertiel, par exemple un gyromètre pour réaliser un capteur de rotation.

De même, bien que l'invention ait été décrite selon un mode de réalisation dans lequel l'élément vibrant a une extrémité reliée à l'organe support par l'intermédiaire d'une masse et d'un cadre de découplage, l'invention s'applique à tout montage de l'élément vibrant, par exemple aux capteurs ayant des éléments vibrants associés pour former un diapason.

La piste conductrice formant la sonde de température peut s'étendre sur toutes les parties additionnelles actives ou seulement sur certaines d'entre elles.

Dans le cas où plusieurs capteurs d'accélération sont délimités dans la même plaque, une piste conductrice de mesure de température peut être associée à chaque capteur ou à des groupes de plusieurs capteurs. L'information fournie par la ou les sondes de températures peut être utilisée en combinaison avec les fréquences de résonance des éléments vibrants pour calculer de manière précise la température de l'un au moins des éléments vibrants.

Bien que la piste conductrice formant la sonde de température ait été illustrée sur la figure 1 selon une disposition sur la même face 9 de la plaque 1 que le circuit d'excitation, ce qui en facilite la fabrication, la sonde de température peut être disposée sur la face 9' de la plaque 1 opposée à la face 9 comme sur la variante de la figure 2. Ceci permet de disposer la sonde de température plus près encore de l'élément vibrant 7. Ainsi la piste conductrice 10 s'étend sur l'organe support 1, le cadre de découplage 3 et les masses 4 et 5. On notera que la piste conductrice 10 possède ici une portion large 10.1 (symbolisée par un trait épais) qui s'étend sur l'organe support 2 et le cadre de découplage 3 et une portion étroite 10.2 (symbolisée par un trait fin) qui s'étend sur les masses 4 et 5. La portion étroite 10.2 a ainsi une résistance plus grande que la portion large 10.1 de sorte que les variations de résistance en fonction de la température sont plus importantes sur la portion étroite 10.2. De la sorte, la température a proximité de l'élément vibrant 7 est privilégiée dans la mesure réalisée. On peut également avoir une ou des portions de largeur non constante sur les masses, l'organe support ou le cadre de découplage. Pour avoir une portion agencée pour présenter une plus forte résistance, on peut également, d'une manière générale, diminuer la section transversale de cette portion (par exemple en diminuant l'épaisseur de cette portion) ou utiliser un métal de conductivité différente, par rapport à celle des autres portions de la piste conductrice.

## Revendications

1. Capteur de détection d'accélération, comportant une plaque (1) dans laquelle sont délimités une partie support (2), au moins un élément vibrant (7) porté par la partie support et sensible à des mouvements auxquels le capteur est soumis, et au moins une partie additionnelle reliée à l'élément vibrant et active dans la détection d'accélération de telle manière qu'elle participe avec l'élément vibrant à la fonction de détection d'accélération, **caractérisé en ce que** le capteur comprend une sonde de température comportant une piste conductrice (10) qui est fixée au moins sur la partie additionnelle active et qui a une résistance variant en fonction d'une température ambiante.

2. Capteur selon la revendication 1, **caractérisé en ce que** la sonde de température (10) s'étend de façon symétrique par rapport à l'élément vibrant (7).

3. Capteur selon la revendication 1, **caractérisé en ce que** la piste conductrice (10) comprend une portion (10.2) agencée pour présenter une plus forte résistance au voisinage de l'élément vibrant (7).

4. Capteur selon la revendication 3, **caractérisé en ce que** cette portion (10.2) présente une section transversale réduite.

5. Capteur selon la revendication 1, **caractérisé en ce que** la partie additionnelle active sur laquelle s'étend la sonde de température comprend une masse (5) reliée à l'élément vibrant (7) et au moins une charnière (6) reliant la masse à la partie support (2).

6. Capteur selon la revendication 1 ou la revendication 5, **caractérisé en ce que** la partie additionnelle active sur laquelle s'étend la sonde de température comprend un cadre de découplage (3, 4) disposé entre la partie support (2) et l'élément vibrant (7).

## Claims

1. Acceleration detection sensor, including a plate (1) in which are delimited a support part (2), at least one vibrating element (7) carried by the support part and responsive to movements to which the sensor is subjected, and at least one additional part connected to the vibrating element and active in the detection of acceleration so that with the vibrating element it participates in the function of detecting acceleration, **characterized in that** the sensor comprises a temperature sensor including a conductive track (10) which is fixed at least to the active additional part and has a resistance varying as a function of an ambient temperature.

2. Sensor according to claim 1, **characterized in that** the temperature sensor (10) extends symmetrically with respect to the vibrating element (7).

3. Sensor according to claim 1, **characterized in that** the conductive track (10) comprises a portion (10.2) adapted to have a higher resistance in the vicinity of the vibrating element (7).

4. Sensor according to claim 3, **characterized in that** said portion (10.2) has a small cross section.

5. Sensor according to claim 1, **characterized in that** the active additional part over which the temperature sensor extends comprises a mass (5) connected to the vibrating element (7) and at least one hinge (6) connecting the mass to the support part (2).

6. Sensor according to claim 1 or claim 5, **characterized in that** the active additional part over which the temperature sensor extends comprises a decoupling frame (3, 4) disposed between the support part (2) and the vibrating element (7).

## Patentansprüche

1. Sensor zum Erfassen einer Beschleunigung, bestehend aus einer Platte (1), innerhalb der ein Halteabschnitt (2), mindestens ein Vibrationselement (7), das vom Halteabschnitt gehalten wird und das bewegungsempfindlich gegenüber den Bewegungen ist, denen der Sensor unterworfen ist, und mindestens ein zusätzlicher Abschnitt abgegrenzt sind, der an das Vibrationselement angeschlossen ist und beim Erfassen der Beschleunigung aktiv ist, so dass er mit dem vibrierenden Element bei der Funktion zum Erfassen der Beschleunigung beteiligt ist, **dadurch gekennzeichnet**, das der Sensor eine Temperatursonde umfasst, die eine Leiterbahn (10) enthält, die mindestens an dem zusätzlichen aktiven Abschnitt befestigt ist, und die einen Widerstand besitzt, der in Abhängigkeit der Umgebungstemperatur variiert.

2. Sensor nach Anspruch 1, **dadurch gekennzeichnet, dass** sich die Temperatursonde (10) symmetrisch in Verhältnis zum Vibrationselement (7) erstreckt.

3. Sensor nach Anspruch 1, **dadurch gekennzeichnet, dass** die Leiterbahn (10) einen Abschnitt (10.2) umfasst, der so ausgebildet ist, dass er in der Nähe des Vibrationselements (7) einen höheren Widerstand aufweist.

4. Sensor nach Anspruch 3, **dadurch gekennzeichnet, dass** dieser Abschnitt (10.2) einen reduzierten Querschnitt aufweist.

5. Sensor nach Anspruch 1, **dadurch gekennzeichnet, dass** der zusätzliche aktive Abschnitt, über den sich die Temperatursonde erstreckt, eine Masse (5), die an das Vibrationselement (7) angeschlossen ist, und mindestens ein Scharnier (6) umfasst, das die Masse an den Halteabschnitt (2) anschließt.

6. Sensor nach Anspruch 1 oder 5, **dadurch gekennzeichnet, dass** der zusätzliche aktive Abschnitt, über den sich die Temperatursonde erstreckt, einen Entkopplungsrahmen (3, 4) umfasst, der zwischen dem Halteabschnitt (2) und dem Vibrationselement (7) angeordnet ist.
